# FASCICULE DE BREVET EUROPEEN

(11) **EP 3 681 968 B1**
(45) Date de publication et mention de la délivrance du brevet: **02.10.2024**
(21) Numéro de dépôt: 18795700.6
(22) Date de dépôt: 07.09.2018
(51) Int. Cl.: C09K 5/04, C10M 171/00

(54) **UTILISATION D'UNE COMPOSITION A BASE D'HYDROCHLOROFLUOROOLEFINE ET D'HUILE MINERALE**
VERWENDUNG EINER ZUSAMMENSETZUNG AUF BASIS VON HYDROCHLORFLUOROLEFIN UND MINERALÖL
COMPOSITION ON THE BASIS OF HYDROCHLOROFLUOROOLEFIN AND MINERAL OIL

(30) Priorité: 12.09.2017 FR 1758429
(43) Date de publication de la demande: 22.07.2020
(73) Titulaire: Arkema France, 92700 Colombes (FR)
(72) Inventeur: RACHED, Wissam, 69630 Chaponost (FR); KINDLER, Pascale, 69270 Fontaines-Sur-Saone (FR)
(74) Mandataire: Arkema Patent
(86) Numéro de dépôt international: PCT/FR2018/052188
(87) Numéro de publication internationale: WO 2019/053355

(56) Documents cités:
- US-A1- 2014 070 129
- US-B2- 8 454 853

## Description

### DOMAINE DE L'INVENTION

La présente invention concerne des compositions comprenant une hydrochlorofluorooléfine, une huile minérale et de l'air, stables et aptes à être utilisées comme compositions de transfert de chaleur.

### ARRIERE-PLAN TECHNIQUE

Les hydrochlorofluorooléfines sont des produits présentant un faible potentiel de réchauffement climatique (GWP). Par exemple, le trans-1 -chloro-3,3,3-trifluoropropène (HCFO-1233zd) possède des propriétés thermodynamiques et thermophysiques très favorables pour une utilisation comme fluide de transfert de chaleur dans les applications de refroidissement, de climatisation et d'air conditionné (notamment dans des compresseurs centrifuges), de production d'électricité (notamment au moyen de cycles organiques de Rankine) et de pompes à chaleur à haute température.

Dans les applications d'air conditionné, la pression du HCFO-1233zdE dans l'évaporateur est souvent inférieure à la pression atmosphérique, ce qui favorise l'infiltration de l'air, et notamment de l'oxygène, dans l'installation. Dans les pompes à chaleur, des infiltrations d'air peuvent survenir lorsque le système est à l'arrêt. Il peut également y avoir des infiltrations d'air dans toute installation utilisant un fluide de transfert de chaleur lors du remplissage ou de l'entretien de ladite installation. La présence d'air en mélange avec le HCFO-1233zdE favorise la réaction d'isomérisation du HCFO-1233zdE et donc la formation de l'isomère HCFO-1233zdZ (cis-1-chloro-3,3,3-trifluoropropène). Cet isomère cis possède des propriétés thermodynamiques bien différentes de celles du HCFO-1233zdE, ce qui présente un impact négatif sur les performances des installations.

Afin d'empêcher l'isomérisation du HCFO-1233zdE en HCFO-1233zdZ, des stabilisants peuvent être ajoutés au HCFO-1233zdE.

Par exemple, le document FR 3033791 décrit l'utilisation d'un composé alcène, en particulier le 2-méthylbut-2-ène et le 3-méthylbut-1-ène, pour prévenir l'isomérisation du trans-1-chloro-3,3,3-trifluoropropène en cis-1-chloro-3,3,3-trifluoropropène.

Dans le domaine industriel, les machines frigorifiques les plus employées sont basées sur le refroidissement par évaporation d'un fluide frigorigène liquide. Après vaporisation, le fluide est compressé puis condensé et enfin détendu afin de compléter le cycle.

Les compresseurs frigorifiques utilisés peuvent être du type alternatifs, scroll, centrifuges ou à vis. En général, la lubrification interne des compresseurs est indispensable pour réduire l'usure et l'échauffement des organes en mouvement, parfaire leur étanchéité et les protéger contre la corrosion.

Comme lubrifiant, on peut utiliser une huile minérale, moins onéreuse que les huiles oxygénées telles que les esters de polyol.

Le document US 8,454,853 décrit la miscibilité du 1-chloro-3,3,3-trifluoropropène avec les huiles minérales et l'utilisation des mélanges correspondants comme compositions réfrigérantes.

Le document US 2014/075746 divulgue des compositions comprenant du chlorotrifluoropropène avec un risque très réduit en inflammabilité apte à être utilisées comme fluide de transfert de chaleur. Ce document enseigne de façon général que la température de condensation peut être supérieure à 70°C et que les compositions peuvent être utilisées avec des lubrifiants qui conviennent pour la réfrigération, parmi lesquels figurent les huiles minérales). Ce document enseigne que la stabilité des mélanges réfrigérants et lubrifiants peuvent dépendre de la teneur d'air, d'oxygène, eau, métaux et impuretés.

Dans les installations frigorifiques, l'huile est en contact direct avec le réfrigérant (par exemple l'hydrochlorofluorooléfine) au niveau du compresseur et dans l'ensemble de l'installation. La combinaison réfrigérant / huile doit être stable quelles que soient les contraintes thermiques dans l'installation, ainsi qu'en présence d'impuretés, d'air infiltré et d'humidité.

L'huile doit assurer la lubrification des paliers du compresseur quelles que soient les conditions d'utilisation du compresseur. A cet égard, la viscosité du mélange réfrigérant / huile est un indicateur de performance de la lubrification. Le réfrigérant se dissout dans l'huile et fait diminuer sa viscosité. Ainsi, pour sélectionner une huile, des mesures de solubilité et de viscosité sur le couple huile / réfrigérant sont réalisées pour déterminer la variation de viscosité du mélange en fonction des conditions d'utilisation. Ces mesures permettent de choisir le grade de viscosité d'huile optimal à utiliser en fonction des températures de fonctionnement.

Or, si au cours du fonctionnement de l'installation, il y a dégradation des composés et formation de nouveaux produits, les mesures de solubilité et viscosité ne sont plus valables. L'huile risque alors de perdre son rôle de lubrification. Ainsi, s'il y a isomérisation ou décomposition du réfrigérant ou de l'huile, les performances de l'installation peuvent être dégradées, de même que celles du lubrifiant en raison de la variation de la viscosité à l'extérieur des plages prédéfinies. Par exemple, la dégradation de l'huile et la formation, en conséquence, de petites particules sont néfastes pour le compresseur.

Il existe donc un réel besoin de fournir un mélange réfrigérant/huile lubrifiante à faible GWP, économique et stable dans le temps, en particulier stable aux hautes températures.

### RESUME DE L'INVENTION

L'invention concerne en premier lieu une composition comprenant au moins une hydrochlorofluorooléfine, au moins une huile minérale et de l'air, l'air étant dans une proportion massique inférieure à 1 % par rapport à la masse du mélange de l'au moins une hydrochlorofluorooléfine et de l'air.

Selon un mode de réalisation, la composition ne comprend pas de stabilisant.

Selon un mode de réalisation, la composition consiste essentiellement, et de préférence consiste, en au moins une hydrochlorofluorooléfine, au moins une huile minérale et de l'air, l'air étant dans une proportion massique de 0 % exclu à 1 % exclu par rapport à la masse du mélange de l'au moins une hydrochlorofluorooléfine et de l'air.

Selon un mode de réalisation, la proportion massique d'air dans la composition est de 0,05 % à 1 % exclu, de préférence de 0,1 % à 1 % exclu, encore plus préférentiellement de 0,2 % à 1 % exclu, par rapport à la masse du mélange de l'au moins une hydrochlorofluorooléfine et de l'air.

Selon un mode de réalisation, la proportion massique d'air dans la composition est de 0 % exclu à 0,6 % inclus, de préférence de 0 % exclu à 0,4 % inclus, par rapport à la masse du mélange de l'au moins une hydrochlorofluorooléfine et de l'air.

Selon un mode de réalisation, la proportion massique d'air dans la composition est de 0,05 % inclus à 0,4 % inclus, de préférence de 0,1 % inclus à 0,4 % inclus, par rapport à la masse du mélange de l'au moins une hydrochlorofluorooléfine et de l'air.

Selon un mode de réalisation, l'au moins une hydrochlorofluorooléfine est choisie parmi le 1-chloro-3,3,3-trifluoropropène, en particulier le trans-1-chloro-3,3,3-trifluoropropène, le 2-chloro-3,3,3-trifluoropropène, le 3,3,3,2-tétrafluorochloro-1-propène, un dichlorotrifluoropropène ou une combinaison de ceux-ci.

Selon un mode de réalisation, l'au moins une hydrochlorofluorooléfine est le 1-chloro-3,3,3-trifluoropropène.

Selon un mode de réalisation, le 1-chloro-3,3,3-trifluoropropène est sous forme trans dans une proportion massique supérieure ou égale à 90 %, de préférence supérieure ou égale à 95 %, de manière plus particulièrement préférée supérieure ou égale à 98 %, de manière encore plus préférée supérieure ou égale à 99 %, de manière encore plus préférée supérieure ou égale à 99,5 %, voire supérieure ou égale à 99,9 %, par rapport à la masse totale de 1-chloro-3,3,3-trifluoropropène.

Selon un mode de réalisation, l'huile minérale est dans une proportion massique de 2 % à 70 % par rapport à la masse totale de la composition.

L'invention concerne également l'utilisation pour le transfert de chaleur d'une composition telle que décrite ci-dessus dans laquelle la composition est soumise à au moins un changement d'état à une température moyenne supérieure ou égale à environ 100°C.

Selon un mode de réalisation, la composition est soumise à au moins un changement d'état à une température moyenne d'environ 100°C à environ 200°C.

Selon un mode de réalisation, l'invention concerne une utilisation telle que décrite ci-dessus dans un système de compression de vapeur ou dans une machine de production d'énergie mécanique ou électrique et de préférence de production d'électricité.

Selon un mode de réalisation, le système de compression de vapeur est un système de climatisation, un système de réfrigération, un système de congélation, ou un système de pompe à chaleur.

L'invention concerne également une installation comprenant un circuit contenant une composition telle que décrite ci-dessus en tant que composition de transfert de chaleur.

Selon un mode de réalisation, l'installation est choisie parmi les installations mobiles ou stationnaires de chauffage par pompe à chaleur, de climatisation, de réfrigération, de congélation et les machines de production d'énergie mécanique ou électrique, de préférence de production d'électricité.

L'invention concerne également un procédé de chauffage ou de refroidissement d'un fluide ou d'un corps au moyen d'un système de compression de vapeur contenant une composition de transfert de chaleur, ledit procédé comprenant successivement l'évaporation de la composition de transfert de chaleur, la compression de la composition de transfert de chaleur, la condensation de la composition de chaleur et la détente de la composition de transfert de chaleur, dans lequel la composition de transfert de chaleur est une composition telle que décrite ci-dessus.

L'invention concerne également un procédé de production d'énergie mécanique ou électrique, et de préférence de production d'électricité au moyen d'une machine comprenant un circuit contenant une composition de transfert de chaleur, ledit procédé comprenant successivement l'évaporation de la composition de transfert de chaleur, la détente de la composition de transfert de chaleur dans une turbine permettant de générer de l'énergie mécanique ou électrique, et de préférence de l'électricité, la condensation de la composition de transfert de chaleur et la compression de la composition de transfert de chaleur, dans lequel la composition de transfert de chaleur est une composition telle que décrite.

La présente invention permet de répondre au besoin exprimé ci-dessus. Elle fournit plus particulièrement des compositions comprenant une hydrochlorofluorooléfine, une huile minérale et de l'air présentant une bonne stabilité thermique, y compris à des températures comprises entre 100°C et 200°C, et sur une durée importante.

Cela est accompli grâce à la fois à l'utilisation d'une huile minérale qui réduit voire empêche la dégradation, et notamment l'isomérisation, de l'hydrochlorofluorooléfine, et à la présence d'air dans une gamme de proportion massique spécifique permettant de limiter, voire d'empêcher, la dégradation de l'huile minérale.

Selon certains modes de réalisation particuliers, l'invention présente également une ou de préférence plusieurs des caractéristiques avantageuses énumérées ci-dessous :
- les compositions selon l'invention peuvent être conservées et utilisées sans ajout de stabilisant ;
- elles sont moins complexes et donc onéreuses à produire que les compositions contenant une huile synthétique oxygénée ;
- elles peuvent être utilisées dans les installations existantes fonctionnant déjà avec une huile minérale en tant que lubrifiant.

### DESCRIPTION DE MODES DE REALISATION DE L'INVENTION

L'invention est maintenant décrite plus en détail et de façon non limitative dans la description qui suit.

Dans le cadre de l'invention, le « *HCFO-1233zd* » se réfère au 1-chloro-3,3,3-trifluoropropène, indépendamment de savoir s'il s'agit de la forme cis ou trans. Les termes « *HCFO-1233zdZ »* et « *HCFO-1233zdE »* se réfèrent respectivement aux formes cis- et trans- du 1-chloro-3,3,3-trifluoropropène. Le terme « *HCFO-1233zd»* couvre donc le HCFO-1233zdZ, le HCFO-1233zdE, et tous les mélanges des deux formes isomères dans toutes proportions.

L'air contient environ 78 vol.% de diazote et environ 21 vol.% de dioxygène, ainsi que divers autres constituants en une teneur de moins de 1 vol.%, dont notamment l'argon et le dioxyde de carbone. Les teneurs ci-dessus sont données en référence à l'air sec. De plus, l'air peut contenir de la vapeur d'eau dans une teneur par rapport à l'air total pouvant varier typiquement de 0,001 vol.% à 5 vol.%.

Sauf mention contraire, dans l'ensemble de la demande, les proportions de composés indiquées sont données en pourcentages massiques.

Sauf indication contraire, dans l'ensemble de la demande, les bornes des gammes sont incluses dans ladite gamme.

### Hydrochlorofluorooléfine

L'invention utilise au moins une hydrochlorofluorooléfine.

Par « *hydrochlorofluorooléfine* », on entend un composé hydrocarbure insaturé substitué par un ou plusieurs atomes de chlore et par un ou plusieurs atomes de fluor, sachant qu'au moins un atome d'hydrogène n'est pas substitué.

Avantageusement, l'hydrochlorofluorooléfine est le 1-chloro-3,3,3-trifluoropropène, le 2-chloro-3,3,3-trifluoropropène, le 3,3,3,2-tétrafluorochloro-1-propène, un dichlorotrifluoropropène ou une combinaison de ceux-ci.

De préférence, l'hydrochlorofluorooléfine est le 1-chloro-3,3,3-trifluoropropène.

Lorsque l'hydrochlorofluorooléfine est le 1-chloro-3,3,3-trifluoropropène, il peut s'agir du trans-1-chloro-3,3,3-trifluoropropène, du cis-1-chloro-3,3,3-trifluoropropène ou d'un mélange de ceux-ci.

Selon un mode de réalisation avantageux, l'hydrochlorofluorooléfine est le 1-chloro-3,3,3-trifluoropropène, ce dernier étant sous forme trans dans une proportion massique supérieure ou égale à 90%, de préférence supérieure ou égale à 95%, de manière plus particulièrement préférée supérieure ou égale à 98%, de manière encore plus préférée supérieure ou égale à 99%, de manière encore plus préférée supérieure ou égale à 99,5%, voire supérieure ou égale à 99,9%, par rapport à la masse totale de 1-chloro-3,3,3-trifluoropropène (c'est-à-dire par rapport à la somme de trans-1-chloro-3,3,3-trifluoropropène et de cis-1-chloro-3,3,3-trifluoropropène).

### Huile minérale

L'invention utilise également une huile minérale.

De préférence, cette huile minérale est un sous-produit issu du raffinage du pétrole.

Les huiles minérales peuvent comprendre des paraffines (c'est-à-dire des hydrocarbures saturés linéaires ou ramifiés), des naphtènes (c'est-à-dire des paraffines cycliques), des composés aromatiques (c'est-à-dire des hydrocarbures insaturés cycliques contenant un ou plusieurs cycles caractérisés par des doubles liaisons alternées avec des liaisons simples) et des composés non hydrocarbures.

Ces composés de l'huile minérale ne sont pas nécessairement présents dans l'huile à l'état libre. Il est fréquent qu'une chaîne paraffinique soit attachée à une structure naphténique ou aromatique. De même, un cycle naphténique auquel est attachée une chaîne paraffinique peut à son tour être attaché à une structure aromatique.

En raison de ces propriétés, une huile minérale est souvent décrite par une analyse des types de carbone. Dans cette analyse, le nombre d'atomes de carbone dans les chaînes paraffiniques, les structures naphténiques et les cycles aromatiques est déterminé et représenté sous la forme d'un pourcentage du total. Ainsi, le pourcentage d'atomes de carbone ayant une configuration paraffinique %C*_{P}*, inclut non seulement les paraffines libres mais également les chaînes paraffiniques attachées aux cycles naphténiques ou aromatiques. De la même manière, le pourcentage d'atomes de carbone des structures naphténiques %C*_{N}* inclut les atomes de carbone des naphtènes libres ainsi que ceux des cycles naphténiques attachés aux cycles aromatiques, et %C*_{A}* représente le carbone des cycles aromatiques. L'analyse du carbone permet de décrire un lubrifiant (ou huile) dans sa structure fondamentale et de prédire un certain nombre de propriétés physiques du lubrifiant.

La classification traditionnelle des huiles minérales comme huiles paraffiniques ou huiles naphténiques fait référence au nombre de molécules paraffiniques ou naphténiques dans l'huile. Les huiles paraffiniques contiennent une proportion plus importante de cire de paraffine, et ainsi ont un indice de viscosité et un point d'écoulement plus élevés que les huiles naphténiques.

Selon un mode de réalisation avantageux, les huiles minérales utilisées dans l'invention possèdent une viscosité cinématique moyenne allant de 1 à 1000 cSt (centistokes) à 40°C, de préférence de 10 à 300 cSt, mesurée selon la norme ISO 3104. La norme ISO 3448 établit un système de classification des lubrifiants liquides industriels en fonction de leur viscosité.

Selon un mode de réalisation particulier, l'huile minérale est une huile naphténique, avec %C*_{P}* de préférence inférieur à 50%. Avantageusement, les cycles naphténiques de la fraction naphténique de l'huile sont en majorité des cycles naphténiques en C5 à C7.

### Compositions

L'invention concerne une composition comprenant au moins une hydrochlorofluorooléfine, au moins une huile minérale et de l'air. Selon l'invention, l'air est présent dans la composition dans une proportion massique de 0% exclu à 1% exclu par rapport à la masse du mélange de l'au moins une hydrochlorofluorooléfine et de l'air.

Cette proportion d'air s'entend de la composition en utilisation, c'est-à-dire par exemple dans le circuit dans lequel elle circule.

Dans certains modes de réalisation, une seule hydrochlorofluorooléfine est présente dans la composition, de préférence telle que décrite ci-dessus. Ainsi, de préférence, la composition comprend uniquement du HCFO-1233zd (de manière prédominante sous forme trans, comme décrit ci-dessus) comme hydrochlorofluorooléfine (à l'exception éventuellement d'autres hydrochlorofluorooléfines présentes comme impuretés dans une teneur massique totale inférieure ou égale à 1 %, ou à 0,5 %, ou à 0,1 %, par rapport au total de la composition).

Alternativement des mélanges de différentes hydrochlorofluorooléfines peuvent être employés dans la composition.

Avantageusement, la composition selon l'invention ne contient pas de stabilisant autre que l'huile minérale.

Par « *stabilisant »,* on entend tous composés permettant de limiter ou d'éliminer la dégradation d'un des constituants de la composition, en particulier de l'hydrochlorofluorooléfine ou l'huile minérale, par exemple limitant ou éliminant l'isomérisation de l'hydrochlorofluorooléfine.

Selon un mode de réalisation, la composition consiste essentiellement en au moins une hydrochlorofluorooléfine, au moins une huile minérale et de l'air dans une proportion massique de 0 % exclu à 1 % exclu par rapport à la masse du mélange de l'au moins une hydrochlorofluorooléfine et de l'air.

Selon un autre mode de réalisation, la composition consiste en au moins une hydrochlorofluorooléfine, au moins une huile minérale et de l'air dans une proportion massique de 0 % exclu à 1 % exclu par rapport à la masse du mélange de l'au moins une hydrochlorofluorooléfine et de l'air.

Selon certains modes de réalisation avantageux, l'air dans la composition est dans une proportion massique, par rapport à la masse du mélange de l'au moins une hydrochlorofluorooléfine et de l'air, de 0,05 % à 1 % exclu, de préférence de 0,1 % à 1 % exclu, encore plus préférentiellement de 0,2 % à 1 % exclu. Selon d'autres modes de réalisation avantageux, l'air dans la composition est dans une proportion massique, par rapport à la masse du mélange de l'au moins une hydrochlorofluorooléfine et de l'air, de 0% exclu à 0,6% inclus, en particulier de 0% exclu à 0,4% inclus, notamment de 0,05 % inclus à 0,4 % inclus, et de préférence de 0,1 % inclus à 0,4 % inclus. Dans d'autres modes de réalisation, l'air est présent dans la composition, dans une proportion massique de 0% exclu à 0,05 % inclus, ou de 0,05 % inclus à 0,1 % inclus, ou de 0,1 % inclus à 0,15 % inclus, ou de 0,15 % inclus à 0,2 % inclus, ou de 0,2 % inclus à 0,25 % inclus, ou de 0,25 % inclus à 0,3 % inclus, ou de 0,3 % inclus à 0,35 % inclus, ou de 0,35 % inclus à 0,4 % inclus, ou de 0,4 % inclus à 0,45 % inclus, ou de 0,45 % inclus à 0,5 % inclus, ou de 0,5 % inclus à 0.55 % inclus, ou de 0,55 % inclus à 0,6 % inclus, ou de 0,6 % inclus à 0,7 % inclus, ou de 0,7 % inclus à 0,8 % inclus, ou 0,8 % inclus à 0,9 % inclus, ou de 0,9 % inclus à 1 % exclu, par rapport à la masse du mélange de l'au moins une hydrochlorofluorooléfine et de l'air. La proportion massique d'air est déterminée par chromatographie en phase gazeuse. La mesure de la proportion massique d'air d'une composition circulant dans une installation en fonctionnement peut être effectuée par le prélèvement d'un échantillon de la phase gazeuse de la composition dans l'installation, puis l'analyse de l'échantillon par chromatographie en phase gazeuse.

Selon un mode de réalisation, dans la composition, l'huile minérale est dans une proportion massique de 2 % à 70% par rapport à la masse totale de la composition. Selon d'autres modes de réalisation, l'huile minérale est dans une proportion massique de 1 à 5 %, ou de 5 à 10 %, ou de 10 à 15 %, ou de 15 à 20 %, ou de 20 à 25 %, ou de 25 à 30 %, ou de 30 à 35 %, ou de 35 à 40 %, ou de 40 à 45 %, ou de 45 à 50 %, ou de 50 à 55 %, ou de 55 à 60 %, de 60 à 65 %, de 65 à 70 %, de 70 à 75 %, de 75 à 80 %, ou de 80 à 85 %, ou de 85 à 90 %, ou de 90 à 95 %, ou de 95 à 99 %, par rapport à la masse totale de la composition.

La proportion massique de la ou des hydrochlorofluorooléfines peut être de 1 à 5 %, ou de 5 à 10 %, ou de 10 à 15 %, ou de 15 à 20 %, ou de 20 à 25 %, ou de 25 à 30 %, ou de 30 à 35 %, ou de 35 à 40 %, ou de 40 à 45 %, ou de 45 à 50 %, ou de 50 à 55 %, ou de 55 à 60 %, ou de 60 à 65 %, ou de 65 à 70 %, ou de 70 à 75 %, ou de 75 à 80 %, ou de 80 à 85 %, ou de 85 à 90 %, ou de 90 à 95 %, ou de 95 à 99 %, par rapport au total de la composition.

Dans des modes de réalisation, la composition comprend en outre au moins un additif, de préférence choisi parmi les nanoparticules, les tensioactifs, les agents traceurs, les agents fluorescents, les agents odorants et les agents de solubilisation.

Selon un mode réalisation particulier, la composition consiste essentiellement, de préférence consiste, en au moins une hydrochlorofluorooléfine, au moins une huile minérale, de l'air et un ou plusieurs additifs choisis parmi les nanoparticules, les tensioactifs, les agents traceurs, les agents fluorescents, les agents odorants et les agents de solubilisation, l'air étant dans une proportion massique de 0 % exclu à 1 % exclu par rapport à la masse du mélange de l'au moins une hydrochlorofluorooléfine et de l'air.

A titre de nanoparticules on peut notamment utiliser les nanoparticules de charbon, les oxydes métalliques, de préférence de cuivre ou d'aluminium, le dioxyde de titane TiO₂, l'alumine Al₂O₃, le disulfure de molybdène MoS₂ ou des combinaisons de ceux-ci.

A titre d'agents traceurs (susceptibles d'être détectés), on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent de la ou des hydrochlorofluorooléfines de l'invention.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent de la ou des hydrochlorofluorooléfines de l'invention.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et les combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)-phénol et les combinaisons de ceux-ci.

### Utilisations

Un objet de l'invention est l'utilisation pour le transfert de chaleur d'une composition telle que décrite ci-dessus dans laquelle la composition est soumise à au moins un changement d'état à une température moyenne supérieure ou égale à 100°C, de préférence à une température moyenne d'environ 100°C à environ 200°C. Selon des modes de réalisation particuliers, la composition est soumise à au moins un changement d'état à une température moyenne d'environ 100°C à environ 110°C, ou d'environ 110°C à environ 120°C, ou d'environ 120°C à environ 130°C, ou d'environ 130°C à environ 140°C, ou d'environ 140°C à environ 150°C, ou d'environ 150°C à environ 160°C, ou d'environ 160°C à environ 170°C, ou d'environ 170°C à environ 180°C, ou d'environ 180°C à environ 200°C.

Par « *changement d'état »,* on entend soit une condensation, c'est-à-dire le passage de la composition de l'état gazeux à l'état liquide, soit une évaporation, c'est-à-dire le passage de la composition de l'état liquide à l'état gazeux.

Par « *température moyenne du changement d'état »,* on entend la température du changement d'état si cette température est constante ou, si la température du changement d'état n'est pas constante, la moyenne arithmétique de la température du début du changement d'état et la température de la fin du changement d'état.

Selon un mode de réalisation, la composition est utilisée dans un système de compression de vapeur.

La présente invention concerne également un procédé de transfert de chaleur reposant sur l'utilisation d'une installation comprenant un système de compression de vapeur qui contient la composition de l'invention en tant que composition de transfert de chaleur. Le procédé de transfert de chaleur peut être un procédé de chauffage ou de refroidissement d'un fluide ou d'un corps.

Par « *composition de transfert de chaleur »,* on entend une composition comprenant un fluide de transfert de chaleur et éventuellement un ou plusieurs additifs qui ne sont pas des composés de transfert de chaleur pour l'application envisagée.

Par « *fluide de transfert de chaleur »,* on entend un fluide susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Par « *composé de transfert de chaleur »,* on entend un composé susceptible d'absorber de la chaleur en s'évaporant à basse température et basse pression et de rejeter de la chaleur en se condensant à haute température et haute pression, dans un circuit de compression de vapeur.

Selon un mode de réalisation, le système de compression de vapeur est :
- un système de climatisation ; ou
- un système de réfrigération ; ou
- un système de congélation ; ou
- un système de pompe à chaleur.

Selon un autre mode de réalisation, la composition est utilisée dans une machine de production d'énergie mécanique ou électrique. La composition de l'invention peut ainsi être utilisée dans un procédé de production de travail mécanique ou d'électricité, notamment conformément à un cycle organique de Rankine.

Il a été découvert que plus la température moyenne de changement d'état à laquelle la composition est soumise est élevée, plus le seuil maximal de quantité d'air admissible est faible. Ainsi, il convient de limiter davantage la présence d'air dans la composition lorsque la température moyenne d'au moins un changement d'état de la composition lors de son utilisation est relativement élevée.

### Installations et procédés

L'invention a aussi pour objet une installation de transfert de chaleur comprenant un circuit contenant une composition telle que décrite ci-dessus en tant que composition de transfert de chaleur. Le circuit comprenant la composition de transfert de chaleur est par exemple un circuit de compression de vapeur.

Selon un mode de réalisation, cette installation est choisie parmi les installations mobiles ou stationnaires de réfrigération, de chauffage (pompe à chaleur), de climatisation et de congélation, et les machines de production d'énergie mécanique ou électrique.

Il peut s'agir notamment d'une installation de pompe à chaleur, auquel cas le fluide ou corps que l'on chauffe (généralement de l'air et éventuellement un ou plusieurs produits, objets ou organismes) est situé dans un local ou un habitacle de véhicule (pour une installation mobile). Selon un mode de réalisation préféré, il s'agit d'une installation de climatisation, auquel cas le fluide ou corps que l'on refroidit (généralement de l'air et éventuellement un ou plusieurs produits, objets ou organismes) est situé dans un local ou un habitacle de véhicule (pour une installation mobile). Il peut s'agir d'une installation de réfrigération ou d'une installation de congélation (ou installation cryogénique), auquel cas le fluide ou corps que l'on refroidit comprend généralement de l'air et un ou plusieurs produits, objets ou organismes, situés dans un local ou un contenant.

L'invention a également pour objet un procédé de chauffage ou de refroidissement d'un fluide ou d'un corps au moyen d'un système de compression de vapeur contenant une composition de transfert de chaleur telle que décrite ci-dessus, ledit procédé comprenant successivement l'évaporation de la composition de transfert de chaleur, la compression de la composition de transfert de chaleur, la condensation de la composition de transfert de chaleur et la détente de la composition de transfert de chaleur.

L'invention a également pour objet un procédé de production de travail mécanique, ou de préférence de production d'électricité, au moyen d'une machine comprenant un circuit qui contient une composition de transfert de chaleur telle que décrite ci-dessus, ledit procédé comprenant successivement l'évaporation de la composition de transfert de chaleur, la détente de la composition de transfert de chaleur dans une turbine permettant de générer de l'énergie mécanique ou électrique, et de préférence de l'électricité, la condensation de la composition de transfert de chaleur et la compression de la composition de transfert de chaleur.

Le circuit de compression de vapeur contenant une composition de transfert de chaleur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre la composition de transfert de chaleur et un autre fluide ou corps.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés. Le compresseur peut être entraîné par un moteur électrique ou par une turbine à gaz (par exemple alimentée par les gaz d'échappement d'un véhicule, pour les applications mobiles) ou par engrenage.

Un compresseur centrifuge est caractérisé en ce qu'il utilise des éléments rotatifs pour accélérer radialement la composition de transfert de chaleur ; il comprend typiquement au moins un rotor et un diffuseur logés dans une enceinte. La composition de transfert de chaleur est introduite au centre du rotor et circule vers la périphérie du rotor en subissant une accélération. Ainsi, d'une part la pression statique augmente dans le rotor, et surtout d'autre part, au niveau du diffuseur, la vitesse est convertie en augmentation de la pression statique. Chaque ensemble rotor/diffuseur constitue un étage du compresseur. Les compresseurs centrifuges peuvent comprendre de 1 à 12 étages, selon la pression finale souhaitée et le volume de fluide à traiter.

Le taux de compression est défini comme étant le rapport de la pression absolue de la composition de transfert de chaleur en sortie sur la pression absolue de ladite composition à l'entrée.

La vitesse de rotation pour les grands compresseurs centrifuges va de 3000 à 7000 tours par minute. Les petits compresseurs centrifuges (ou mini-compresseurs centrifuges) fonctionnent généralement à une vitesse de rotation qui va de 40000 à 70000 tours par minute et comportent un rotor de petite taille (généralement moins de 0,15 m).

On peut utiliser un rotor à plusieurs étages pour améliorer l'efficacité du compresseur et limiter le coût énergétique (par rapport à un rotor à un seul étage). Pour un système à deux étages, la sortie du premier étage du rotor alimente l'entrée du second rotor. Les deux rotors peuvent être montés sur un axe unique. Chaque étage peut fournir un taux de compression du fluide d'environ 4 sur 1, c'est-à-dire que la pression absolue de sortie peut être égale à environ quatre fois la pression absolue à l'aspiration. Des exemples de compresseurs centrifuges à deux étages, en particulier pour les applications automobiles, sont décrits dans les documents US 5,065,990 et US 5,363,674.

Le compresseur centrifuge peut être entraîné par un moteur électrique ou par une turbine à gaz (par exemple alimentée par les gaz d'échappement d'un véhicule, pour les applications mobiles) ou par engrenage.

L'installation peut comprendre un couplage du détendeur avec une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de la composition de transfert de chaleur et le fluide ou corps à chauffer ou refroidir.

L'installation peut également éventuellement comprendre deux circuits de compression de vapeur (ou plus), contenant des compositions de transfert de chaleur identiques ou distinctes. Par exemple, les circuits de compression de vapeur peuvent être couplés entre eux.

Le circuit de compression de vapeur fonctionne selon un cycle classique de compression de vapeur. Le cycle comprend le changement d'état de la composition de transfert de chaleur d'une phase liquide (ou diphasique liquide / vapeur) vers une phase vapeur à une pression relativement faible, puis la compression de la composition en phase vapeur jusqu'à une pression relativement élevée, le changement d'état (condensation) de la composition de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, via un fluide caloporteur) est absorbée par la composition de transfert de chaleur, lors de l'évaporation de cette dernière, et ce à une température relativement faible par rapport à l'environnement. Les procédés de refroidissement comprennent les procédés de climatisation (avec des installations mobiles, par exemple dans des véhicules, ou stationnaires), de réfrigération et de congélation ou de cryogénie.

Dans le cas d'un procédé de chauffage, de la chaleur est cédée (directement ou indirectement, via un fluide caloporteur) de la composition de transfert de chaleur, lors de la condensation de celle-ci, au fluide ou au corps que l'on chauffe, et ce à une température relativement élevée par rapport à l'environnement. L'installation permettant de mettre en oeuvre le transfert de chaleur est appelée dans ce cas « *pompe à chaleur ».*

Il est possible d'utiliser tout type d'échangeur de chaleur pour la mise en oeuvre des compositions de transfert de chaleur selon l'invention, et notamment des échangeurs de chaleur à co-courant ou, de préférence, des échangeurs de chaleur à contre-courant.

Selon un mode de réalisation préféré, l'invention prévoit que les procédés de refroidissement et de chauffage, et les installations correspondantes, comprennent un échangeur de chaleur à contre-courant, soit au condenseur, soit à l'évaporateur. En effet, les compositions de transfert de chaleur selon l'invention sont particulièrement efficaces avec des échangeurs de chaleur à contre-courant. De préférence, à la fois l'évaporateur et le condenseur comprennent un échangeur de chaleur à contre-courant.

Selon l'invention, par « *échangeur de chaleur à contre-courant »,* on entend un échangeur de chaleur dans lequel de la chaleur est échangée entre un premier fluide et un deuxième fluide, le premier fluide à l'entrée de l'échangeur échangeant de la chaleur avec le deuxième fluide à la sortie de l'échangeur, et le premier fluide à la sortie de l'échangeur échangeant de la chaleur avec le deuxième fluide à l'entrée de l'échangeur.

Par exemple, les échangeurs de chaleur à contre-courant comprennent les dispositifs dans lesquels le flux du premier fluide et le flux du deuxième fluide sont dans des directions opposées, ou quasiment opposées. Les échangeurs fonctionnant en mode courant croisé à tendance contre-courant sont également compris parmi les échangeurs de chaleur à contre-courant au sens de la présente demande.

Dans des procédés de « *réfrigération à basse température »,* la température d'entrée de la composition de transfert de chaleur à l'évaporateur est de préférence de -45°C à -15°C, notamment de -40°C à -20°C, de manière plus particulièrement préférée de -35°C à -25°C et par exemple d'environ -30°C ; et la température du début de la condensation de la composition de transfert de chaleur au condenseur est de préférence de 25°C à 80°C, notamment de 30°C à 60°C, de manière plus particulièrement préférée de 35°C à 55°C et par exemple d'environ 40°C.

Dans des procédés de « *refroidissement à température modérée »,* la température d'entrée de la composition de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation de la composition de transfert de chaleur au condenseur est de préférence de 25°C à 80°C, notamment de 30°C à 60°C, de manière plus particulièrement préférée de 35°C à 55°C et par exemple d'environ 50°C. Ces procédés peuvent être des procédés de réfrigération ou de climatisation.

Dans des procédés de « *chauffage à température modérée »,* la température d'entrée de la composition de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation de la composition de transfert de chaleur au condenseur est de préférence de 25°C à 80°C, notamment de 30°C à 60°C, de manière plus particulièrement préférée de 35°C à 55°C et par exemple d'environ 50°C.

Dans des procédés de « *chauffage haute température »,* la température d'entrée de la composition de transfert de chaleur à l'évaporateur est de préférence de -20°C à 90°C, notamment de 10°C à 90°C, de manière plus particulièrement préférée de 50°C à 90°C et par exemple d'environ 80°C ; et la température du début de la condensation de la composition de transfert de chaleur au condenseur est de préférence de 70°C à 160°C, notamment de 90°C à 150°C, de manière plus particulièrement préférée de 110°C à 140°C et par exemple d'environ 135°C.

Les compositions selon l'invention sont particulièrement intéressantes dans le transport frigorifique.

Il est considéré comme « *transport frigorifique* » tout déplacement de produits périssables sous espace réfrigéré. Les produits alimentaires ou pharmaceutiques représentent une partie importante des produits périssables.

Le transport frigorifique peut être effectué par camion, rail ou bateau, éventuellement à l'aide des containers multi-plateformes qui s'adaptent aussi bien sur les camions, les rails ou les bateaux.

Dans le transport frigorifique, la température des espaces réfrigérés est comprise entre -30°C et 16°C. La charge en réfrigérant dans le transport par camion, rail ou containers multi-plateforme varie entre 4 kg et 8 kg de réfrigérant. Les installations dans les bateaux peuvent contenir entre 100 et 500 kg de réfrigérant.

Le réfrigérant le plus utilisé à ce jour pour cette application est le R404A.

Les températures de fonctionnement des installations frigorifiques sont fonction des besoins en température de réfrigération et des conditions climatiques extérieures. Une même installation frigorifique doit être capable de couvrir une large gamme de température comprise entre -30°C et 16°C et opérer aussi bien dans des climats froids que chauds.

La condition la plus contraignante en température d'évaporation est -30°C.

### EXEMPLES

Les exemples suivants illustrent l'invention sans la limiter.

### Exemple 1

La stabilité thermique de différentes compositions a été testée. Ces essais de stabilité thermique sont réalisés suivant la norme ASHRAE 97-2007 intitulée « *Sealed glass tube method to test the chemical stability of materials for use within réfrigérant systems ».*

Les compositions ont été préparées comme suit.

Tous les tubes sont chargés sous vide avec les quantités suivantes : 5 g d'huile Suniso 3GS et 2 g de HCFO-1233zdE.

L'air est ajouté à la fin selon les compositions suivantes, en pourcentage massique par rapport au mélange HCFO-1233zdE et air.

| Composition n° | 1 | 2 | 3 |
|---|---|---|---|
| air (% massique) | 0.2 | 0.4 | 1 |

Juste après leur préparation, les compositions présentent une coloration qui correspond à la couleur d'huile d'origine.

Les différentes compositions ont été laissées pendant 14 jours à 180°C.

Puis une analyse de couleur par spectrocolorimétrie des compositions selon l'échelle de couleur de Gardner a été réalisée, selon la norme ISO 4630:2015.

L'intensité de la couleur observée est proportionnelle à la dégradation de l'huile. En effet, cette dégradation entraine aussi la formation de particules noires à pourcentage massique d'air supérieur ou égal à 1 %.

Les résultats sont résumés dans le tableau ci-dessous :

| Composition n° | 1 | 2 | 3 |
|---|---|---|---|
| air (% massique) | 0.2 | 0.4 | 1 |
| Couleur selon l'échelle de couleur de Gardner | Jaune Foncé | Orange | Marron |

### Echelle Gardner :

- Gardner 1 : jaune très pâle ;
- Gardner 2 à 5 : jaune pâle ;
- Gardner 6 à 10 : jaune foncé ;
- Gardner 11 à 14 : orange ;
- Gardner 15 à 17 : orange très foncé / marron clair ;
- Gardner 18 : marron.

On constate que lors d'une utilisation à 180°C, les compositions comprenant du HCFO-1233zd, de l'huile minérale et 0,2 ou 0,4 % en masse d'air sont stables, la dégradation de l'huile étant faible.

En revanche, lorsque le pourcentage massique d'air est supérieur ou égale à 1%, l'huile se dégrade de manière relativement importante à la température de 180°C.

## Revendications

1. Utilisation pour le transfert de chaleur d'une composition comprenant au moins une hydrochlorofluorooléfine, au moins une huile minérale et de l'air, l'air étant dans une proportion massique inférieure à 1 % par rapport à la masse du mélange de l'au moins une hydrochlorofluorooléfine et de l'air, dans laquelle la composition est soumise à au moins un changement d'état à une température moyenne supérieure ou égale à environ 100°C.

2. Utilisation selon la revendication 1, dans laquelle la composition est soumise à au moins un changement d'état à une température moyenne d'environ 100°C à environ 200°C.

3. Utilisation selon la revendication 1 ou 2, dans laquelle la composition ne comprend pas de stabilisant.

4. Utilisation selon l'une des revendications 1 à 3, dans laquelle la composition consiste essentiellement, et de préférence consiste, en au moins une hydrochlorofluorooléfine, au moins une huile minérale et de l'air, l'air étant dans une proportion massique de 0 % exclu à 1 % exclu par rapport à la masse du mélange de l'au moins une hydrochlorofluorooléfine et de l'air.

5. Utilisation selon l'une des revendications 1 à 4, dans laquelle la proportion massique d'air dans la composition est de 0,05 % à 1 % exclu, de préférence de 0,1 % à 1 % exclu, encore plus préférentiellement de 0,2 % à 1 % exclu, par rapport à la masse du mélange de l'au moins une hydrochlorofluorooléfine et de l'air.

6. Utilisation selon l'une des revendications 1 à 4, dans laquelle la proportion massique d'air dans la composition est de 0 % exclu à 0,6 % inclus, de préférence de 0 % exclu à 0,4 % inclus par rapport à la masse du mélange de l'au moins une hydrochlorofluorooléfine et de l'air.

7. Utilisation selon l'une des revendications 1 à 6, dans laquelle la proportion massique d'air dans la composition est de 0,05 % inclus à 0,4 % inclus, de préférence de 0,1 % inclus à 0,4 % inclus par rapport à la masse du mélange de l'au moins une hydrochlorofluorooléfine et de l'air.

8. Utilisation selon l'une des revendications 1 à 7, dans laquelle l'au moins une hydrochlorofluorooléfine est choisie parmi le 1-chloro-3,3,3-trifluoropropène, en particulier le trans-1-chloro-3,3,3-trifluoropropène, le 2-chloro-3,3,3-trifluoropropène, le 3,3,3,2-tétrafluorochloro-1-propène, un dichlorotrifluoropropène ou une combinaison de ceux-ci.

9. Utilisation selon l'une des revendications 1 à 8, dans laquelle l'au moins une hydrochlorofluorooléfine est le 1-chloro-3,3,3-trifluoropropène.

10. Utilisation selon la revendication 9, dans laquelle le 1-chloro-3,3,3-trifluoropropène est sous forme trans dans une proportion massique supérieure ou égale à 90 %, de préférence supérieure ou égale à 95 %, de manière plus particulièrement préférée supérieure ou égale à 98 %, de manière encore plus préférée supérieure ou égale à 99 %, de manière encore plus préférée supérieure ou égale à 99,5 %, voire supérieure ou égale à 99,9 %, par rapport à la masse totale de 1-chloro-3,3,3-trifluoropropène.

11. Utilisation selon l'une des revendications 1 à 10, dans laquelle l'huile minérale est dans une proportion massique de 2 % à 70 % par rapport à la masse totale de la composition.

12. Utilisation selon l'une des revendications 1 à 11, dans un système de compression de vapeur ou dans une machine de production d'énergie mécanique ou électrique et de préférence de production d'électricité.

13. Utilisation selon la revendication 12, dans laquelle le système de compression de vapeur est un système de climatisation, un système de réfrigération, un système de congélation, ou un système de pompe à chaleur.

## Patentansprüche

1. Verwendung einer Zusammensetzung, die mindestens ein Hydrochlorfluorolefin, mindestens ein Mineralöl und Luft umfasst, wobei die Luft in einem Massenanteil von weniger als 1 %, bezogen auf die Masse der Mischung des mindestens einen Hydrochlorfluorolefins und der Luft, vorliegt, zur Wärmeübertragung, wobei die Zusammensetzung mindestens einer Zustandsänderung bei einer mittleren Temperatur größer oder gleich ungefähr 100 °C unterworfen wird.

2. Verwendung nach Anspruch 1, wobei die Zusammensetzung mindestens einer Zustandsänderung bei einer mittleren Temperatur von ungefähr 100 °C bis ungefähr 200 °C unterworfen wird.

3. Verwendung nach Anspruch 1 oder 2, wobei die Zusammensetzung keinen Stabilisator umfasst.

4. Verwendung nach einem der Ansprüche 1 bis 3, wobei die Zusammensetzung im Wesentlichen aus mindestens einem Hydrochlorolefin, mindestens einem Mineralöl und Luft besteht und vorzugsweise daraus besteht, wobei die Luft in einem Massenanteil von 0 % ausschließlich bis 1 % ausschließlich, bezogen auf die Masse der Mischung des mindestens einen Hydrochlorfluorolefins und der Luft, vorliegt.

5. Verwendung nach einem der Ansprüche 1 bis 4, wobei der Massenanteil von Luft in der Zusammensetzung 0,05 % bis 1 % ausschließlich, vorzugsweise 0,1 bis 1 % ausschließlich, noch weiter bevorzugt 0,2 % bis 1 % ausschließlich, bezogen auf die Masse der Mischung des mindestens einen Hydrochlorfluorolefins und der Luft, beträgt.

6. Verwendung nach einem der Ansprüche 1 bis 4, wobei der Massenanteil von Luft in der Zusammensetzung 0 % ausschließlich bis 0,6 % einschließlich, vorzugsweise 0 % ausschließlich bis 0,4 % einschließlich, bezogen auf die Masse der Mischung des mindestens einen Hydrochlorfluorolefins und der Luft, beträgt.

7. Verwendung nach einem der Ansprüche 1 bis 6, wobei der Massenanteil von Luft in der Zusammensetzung 0,05 % einschließlich bis 0,4 % einschließlich, vorzugsweise 0,1 % einschließlich bis 0,4 % einschließlich, bezogen auf die Masse der Mischung des mindestens einen Hydrochlorfluorolefins und der Luft, beträgt.

8. Verwendung nach einem der Ansprüche 1 bis 7, wobei das mindestens eine Hydrochlorolefin aus 1-Chlor-3,3,3-trifluorpropen, insbesondere trans-1-Chlor-3,3,3-trifluorpropen, 2-Chlor-3,3,3-trifluorpropen, 3,3,3,2-Tetrafluorchlor-1-propen, einem Dichlortrifluorpropen oder einer Kombination davon ausgewählt ist.

9. Verwendung nach einem der Ansprüche 1 bis 8, wobei es sich bei dem mindestens einen Hydrochlorfluorolefin um 1-Chlor-3,3,3-trifluorpropen handelt.

10. Verwendung nach Anspruch 9, wobei das 1-Chlor-3,3,3-trifluorpropen in der trans-Form in einem Massenanteil größer oder gleich 90 %, vorzugsweise größer oder gleich 95 %, spezieller bevorzugt größer oder gleich 98 %, noch weiter bevorzugt größer oder gleich 99 %, noch weiter bevorzugt größer oder gleich 99,5 % oder sogar größer oder gleich 99,9 %, bezogen auf die Gesamtmasse von 1-Chlor-3,3,3-trifluorpropen, vorliegt.

11. Verwendung nach einem der Ansprüche 1 bis 10, wobei das Mineralöl in einem Massenanteil von 2 % bis 70 %, bezogen auf die Gesamtmasse der Zusammensetzung, vorliegt.

12. Verwendung nach einem der Ansprüche 1 bis 11 in einem Dampfverdichtungssystem oder einer Maschine zur Erzeugung von mechanischer oder elektrischer Energie und vorzugsweise zur Erzeugung von Elektrizität.

13. Verwendung nach Anspruch 12, wobei es sich bei dem Dampfverdichtungssystemen um ein Klimatisierungssystem, ein Kälteerzeugungssystem, ein Gefriersystem oder ein Wärmepumpensystem handelt.

## Claims

1. Use for heat transfer of a composition comprising at least one hydrochlorofluoroolefin, at least one mineral oil and air, the air being in a weight proportion of less than 1% relative to the weight of the mixture of the at least one hydrochlorofluoroolefin and air, wherein the composition is subjected to at least one change of state at a mean temperature greater than or equal to approximately 100°C.

2. Use according to Claim 1, wherein the composition is subjected to at least one change of state at a mean temperature of approximately 100°C to approximately 200°C.

3. Use according to Claim 1 or 2, wherein the composition does not comprise a stabilizer.

4. Use according to one of Claims 1 to 3, wherein the composition essentially consists, and preferably consists, of at least one hydrochlorofluoroolefin, at least one mineral oil and air, the air being in a weight proportion of 0% excluded to 1% excluded relative to the weight of the mixture of the at least one hydrochlorofluoroolefin and air.

5. Use according to one of Claims 1 to 4, wherein the weight proportion of air in the composition is from 0.05% to 1% excluded, preferably from 0.1% to 1% excluded, even more preferentially from 0.2% to 1% excluded, relative to the weight of the mixture of the at least one hydrochlorofluoroolefin and air.

6. Use according to one of Claims 1 to 4, wherein the weight proportion of air in the composition is from 0% excluded to 0.6% included, preferably from 0% excluded to 0.4% included, relative to the weight of the mixture of the at least one hydrochlorofluoroolefin and air.

7. Use according to one of Claims 1 to 6, wherein the weight proportion of air in the composition is from 0.05% included to 0.4% included, preferably from 0.1% included to 0.4% included, relative to the weight of the mixture of the at least one hydrochlorofluoroolefin and air.

8. Use according to one of Claims 1 to 7, wherein the at least one hydrochlorofluoroolefin is chosen from 1-chloro-3,3,3-trifluoropropene, in particular trans-1-chloro-3,3,3-trifluoropropene, 2-chloro-3,3,3-trifluoropropene, 3,3,3,2-tetrafluorochloro-1-propene, a dichlorotrifluoropropene or a combination thereof.

9. Use according to one of Claims 1 to 8, wherein the at least one hydrochlorofluoroolefin is 1-chloro-3,3,3-trifluoropropene.

10. Use according to Claim 9, wherein the 1-chloro-3,3,3-trifluoropropene is in trans form in a weight proportion greater than or equal to 90%, preferably greater than or equal to 95%, more particularly preferably greater than or equal to 98%, even more preferably greater than or equal to 99%, even more preferably greater than or equal to 99.5%, or even greater than or equal to 99.9%, relative to the total weight of 1-chloro-3,3,3-trifluoropropene.

11. Use according to one of Claims 1 to 10, wherein the mineral oil is in a weight proportion of 2% to 70% relative to the total weight of the composition.

12. Use according to one of Claims 1 to 11, in a vapour-compression system or in a machine for producing mechanical or electrical energy and preferably for producing electricity.

13. Use according to Claim 12, wherein the vapour-compression system is an air-conditioning system, a refrigeration system, a freezing system, or a heat pump system.
